# EUROPEAN PATENT APPLICATION

(11) **EP 3 168 075 A1**
(43) Date of publication of application: **17.05.2017**
(21) Application number: 15306814.3
(22) Date of filing: 16.11.2015
(51) Int. Cl.: B60K 15/03, B60K 13/04

(54) **TANK INCLUDING A CONNECTOR AND METHOD FOR CONNECTING AN ELECTRICAL DEVICE IN A TANK**

(71) Applicant: Plastic Omnium Advanced Innovation and Research, 1120 Bruxelles (BE)
(72) Inventor: LEONARD, Stéphane, 1090 BRUXELLES (BE); JANNOT, Frédéric, 1470 BOUSVAL (BE); BONZOM, Renaud, 1120 BRUXELLES (BE)
(74) Representative: Remy, Vincent Noel Paul

(57) **Abstract**

The invention relates to a tank (300) comprising an electrical device (400) attached to a first connector (100), said first connector being adapted for being coupled to a second connector (200), said first connector comprising a first plastic part (110) and at least one first electrically conductive contact element (121, 122), said at least one first electrically conductive contact element being electrically connected with said electrical device, said second connector comprising a second plastic part (210) and at least one second electrically conductive contact element (221, 222), said at least one second electrically conductive contact element being configured for being coupled with said at least one first electrically conductive contact element, wherein said first plastic part (110) is adhered along a closed curve (150) extending around the at least one first electrically conductive contact element (121, 122) to a plastic portion (350) inside the tank.

## Description

### Field of Invention

The field of the invention relates to the field of tanks with electrical devices, and in particular to vehicle tanks. Particular embodiments relate to a tank including an electrical device and a method for connecting an electrical device in a tank.

### Background

When an electrical cable or a data cable has to be mounted through a through-hole in a leak tight way, according to prior art solutions, use is made of an O-ring or glue which is arranged between the wall of the through-hole and the cable. A disadvantage of this solution is that O-rings tend to lose their good compression properties after aging. Consequently, the sealing is not ensured in the long term due to durability issues. Further, plastic parts tend to show creep if a constant stress is applied thereon. As a result, the O-ring will not be properly maintained in cases of constant stress. A disadvantage of the glue is that the mounting is permanent.

Further, standard leak-tight electrical connectors exist. However, such electrical connectors have a costly mechanical locking mechanism and require a seal, usually a lip seal, between two mating connectors. In addition, in such standard leak-tight electrical connectors, each connected wire on the connector has typically its own wire seal. Such connectors have the drawback that the connector is costly, that there is a risk of seal damage, and that a high number of components are required for the locking mechanism of the mating connectors.

### Summary

The object of embodiments of the invention is to be able to connect electrical devices in a tank, such as a heater, a pump or a sensor, through a sealed interface in an improved manner.

According to a first aspect of the invention there is provided a tank comprising an electrical device attached to a first connector. The first connector is adapted for being coupled to a second connector, and comprises a first plastic part and at least one first electrically conductive contact element. The at least one first electrically conductive contact element is electrically connected with the electrical device in the tank. The second connector comprises a second plastic part and at least one second electrically conductive contact element. The at least one second electrically conductive contact element is configured for being coupled with the at least one first electrically conductive contact element. The first connector is arranged at least partially in the tank, and the first plastic part thereof is adhered to a plastic portion inside the tank along a closed curve extending around the at least one first electrically conductive contact element.

By adhering the first plastic part of the first connector along a closed curve to a plastic portion inside the tank, a good seal can be obtained, such that a fluid in the tank cannot reach the at least one first electrically conductive contact element. The closed curve can have any shape, e.g. the shape of a ring, a rectangular shape, an oval shape, etc. Moreover, the closed curve can be part of a surface area extending around the at least one first electrically conductive contact element. By having a closed curve, there is obtained a sealing between an internal area of the tank and the at least one first electrically conductive contact element.

In a preferred embodiment, the plastic portion inside the tank is any one of the following: an inner side of the tank surrounding a connector opening in the tank; the second plastic part of the second connector; an inner side of a mounting flange arranged in or around a flange opening in the tank. When the plastic portion is an inner side, i.e. an inner wall part, of the tank surrounding a connector opening in the tank, i.e. a connector opening in the inner wall part of the tank, preferably the first connector is mounted such that the at least one first electrically conductive contact element is accessible from outside the tank, and such that the second connector can be coupled to the first connector from outside the tank.
When the plastic portion inside the tank is the second plastic part of the second connector, the first plastic part is adhered to the second plastic part such as to enclose the first and second electrically conductive contact elements of the first and second connector. In that way, the first connector can be coupled to the second connector in the tank, whilst ensuring a good sealing.
When the plastic portion inside the tank is the inner side of a mounting flange arranged in or around a flange opening in the tank, the first plastic part is adhered along a closed curve to the inner side of the mounting flange, around a connector opening in the mounting flange, such that the first connector is accessible through the connector opening in the mounting flange from the outside of the tank.

In an embodiment where the first plastic part is adhered along a closed curve to an inner side of the tank surrounding a connector opening in the tank, the second plastic part may be adhered along a closed curve to an outer side of the tank, surrounding the connector opening in the tank. In that way, the first and second electrically conductive contact elements will be also sealed against any influences from outside the tank.

In an embodiment where the first plastic part is adhered to the second plastic part of the second connector, the first plastic part may have a circumferential edge which is adhered to a corresponding circumferential edge of the second plastic part of the second connector, around the at least one first and second electrically conductive contact elements. The first connector is then coupled to the second connector inside the tank, such that the first and second connectors are located entirely within the tank. In such an embodiment, there may be provided a further first connector welded to an inner side of the tank or to an inner side of a mounting flange, which further first connector may have at least one cable connected to the second connector inside the tank. This will be useful when it is desirable to connect two electrical devices in series in a tank.

In an exemplary embodiment, the electrical device comprises at least one connection cable, and the at least one connection cable has an end which is sealingly integrated in the first plastic part, e.g. by overmoulding the first plastic part over an end of the connection cable. The at least one first electrically conductive contact element may be electrically connected to the at least one connection wire of the at least one connection cable inside the first plastic part. This may be done e.g. by crimping an electrically conductive contact element on an end of a connection wire of a connection cable.

In an exemplary embodiment, the electrical device has two connection cables, and the first connector comprises two electrically conductive contact elements connected to the two respective connection cables inside the first plastic part.

In an exemplary embodiment, the at least one first or second electrically conductive contact element comprises at least one rigid connector pin, and the at least one second or first electrically conductive contact element comprises at least one rigid contact bus dimensioned for receiving the at least one connection pin. In other words, either the first connector or the second connector may be provided with at least one connector pin, and the corresponding second or first connector may then be provided with a corresponding contact element, typically a contact bus. In exemplary embodiments, both the first and the second electrically conductive contact elements may protrude outward of the first and second plastic part, respectively. In other embodiments, the first or the second contact element may be arranged in the plastic part of the respective connector. For example, a contact bus may be arranged in the plastic part of the connector.

In a preferred embodiment, the first and/or second connector is made by overmoulding a connection cable with molten plastic material. In an exemplary embodiment the overmoulding comprises: placing the cable between a first mould part comprising a first cavity and a second mould part comprising a second cavity, wherein the first and second cavity are designed for delimiting a volume which surrounds the cable; and injecting the plastic material around the cable whilst heating the wire or shortly after having heated the wire. Preferably the heating is performed by connecting the wire to an electrical power source outside of the mould formed by said first and second mould parts. Alternatively the heating may be performed by actively applying heat to the wire from outside the mould formed by said first and second mould parts.

In a preferred embodiment the overmoulding is such that a plastic sheath of the cable bonds to the plastic material, by fusing together the plastic sheath and the plastic material. Preferably the plastic sheath is made of a polymer material that is compatible with the plastic material in the sense that polymer entanglements can be created at the interface of the sheath and the plastic material. Preferably the plastic material is a thermoplastic material, and the sheath is made of a thermoplastic material. In a possible embodiment the sheath is made of polyamide material, e.g. PA66, and the plastic material is also made of a polyamide material. Optionally, the plastic material could be a polyethylene or polypropylene comprising an additive to ensure its compatibility with the material of the sheath. Such an overmoulding technique has been described in PCT/EP2015/051741, in the name of the applicant, which is included herein by reference.

In a preferred embodiment, the first plastic part is adhered to the plastic portion inside the tank by welding. This is preferably hot plate welding, but may also be laser welding.

In an exemplary embodiment, the first plastic part comprises a first positioning element between the at least one first electrically conductive contact element and the closed curve, and the second plastic part comprises a second positioning element configured to cooperate with the first positioning element, such that the positioning of the second connector is guided by the first and second positioning elements. These positioning elements may be parts protruding outwardly from a coupling side of the first and second connector, around the first and second electrically conductive contact elements.

According to a second aspect of the invention, there is provided a method for connecting an electrical device in a tank. The method comprises providing the electrical device with a first connector, wherein the first connector comprises a first plastic part and at least one first electrically conductive contact element, which is electrically connected with the electrical device. The method further comprises assembling the tank such that the first plastic part is adhered along a closed curve to a plastic portion inside the tank, and such that a second connector is coupled with the first connector, wherein the second connector comprises a second plastic part and at least one second electrically conductive contact element, and the at least one second electrically conductive contact element is coupled with the at least one first electrically conductive contact element.

In an exemplary embodiment, the plastic portion in the tank is any one of the following: an inner side of the tank surrounding a connector opening in the tank; the second plastic part of the second connector; an inner side of a mounting flange arranged in a flange opening in the tank.

When the plastic portion is an inner side, i.e. an inner wall part, of the tank surrounding a connector opening in the tank, i.e. a connector opening in the inner wall part of the tank, the assembling of the tank may comprise:
- adhering the first plastic part along a closed curve to an inner side of a first tank shell,
- adhering the first tank shell to a second tank shell such that a tank comprising the electrical device is formed, and
- coupling the second connector to the first connector.
Preferably the first connector is arranged against the inner side of the first tank shell such that the at least one first electrically conductive contact element is accessible from outside the tank, through the connector opening, and such that the second connector can be coupled to the first connector from outside the tank.

When the plastic portion inside the tank is the second plastic part of the second connector, the first plastic part is adhered to the second plastic part such as to enclose the first and second electrically conductive contact elements of the first and second connector. In that way, the first connector can be coupled to the second connector in the tank, whilst ensuring a good sealing. The assembling of the tank may then comprise:
- coupling the second connector to the first connector,
- adhering the first plastic part along a closed curve to the second plastic part,
- arranging the electrical device and the first and second connector between a first tank shell and a second tank shell;
- adhering the first tank shell to the second tank shell such that a tank comprising the electrical device is formed.

When the plastic portion inside the tank is the inner side of a mounting flange arranged in or around a flange opening in the tank, the first plastic part is adhered along a closed curve to the inner side of the mounting flange, around a connector opening in the mounting flange, such that the first connector is accessible through the connector opening in the mounting flange from the outside of the tank. The assembling of the tank may comprise:
- adhering the first plastic part along a closed curve to an inner side of a mounting flange,
- mounting the mounting flange in the flange opening in the tank or in a tank shell of the tank (the joining of a first and second tank shell may be performed before or after the mounting of the mounting flange in the tank or tank shell); and
- coupling the second connector to the first connector.

In a preferred embodiment, the adhering is done by welding, e.g. hot plate welding or laser welding.

The skilled person understands that the invention is not limited to the provision of one first connector in a tank. More in particular, there may be provided two or more first connectors in the tank with associated second connectors. Also, the invention may be combined with other techniques, such as the technique described in PCT/EP2015/051741, which is included herein by reference. More in particular, a connection cable connected to a second connector inside the tank may be provided with an overmoulded plastic part which is welded in an opening in the tank.

In an exemplary embodiment, the first plastic connector is made by overmoulding a connection cable with plastic material, and by connecting the at least one first electrically conductive contact element to a connection wire of the connection cable.

Embodiments of the invention may be used in additive tanks, in particular tanks for diesel additives, such as urea tanks, in gasoline or diesel fuel tanks, in other fuel tanks, etc. The tank according to the invention is preferably made of plastic, that is to say made of a material comprising at least one synthetic resin polymer. In a preferred embodiment the tank is made of polyethylene. However, all types of plastic may be suitable. Particularly suitable are plastics that belong to the category of thermoplastics. The term "thermoplastic" is understood to mean any thermoplastic polymer, including thermoplastic elastomers, and blends thereof. The term "polymer" is understood to mean both homopolymers and copolymers (especially binary or ternary copolymers). Preferably, the tank also comprises a layer of a fuel- or additive-impermeable resin such as, for example, EVOH (a partially hydrolysed ethylene/vinyl acetate copolymer), e.g. an EVOH layer between two HDPE layers. Alternatively, the tank may be subjected to a surface treatment (fluorination or sulphonation) for the purpose of making it impermeable to the liquid/vapors inside the tank.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a cross-section of an exemplary embodiment of a tank comprising a first connector;
Figure 2 illustrates schematically a cross-section of the first connector of figure 1 coupled to a second connector;
Figure 3 illustrates schematically a cross-section of an exemplary embodiment of a tank comprising a mounting flange with a first connector coupled to a second connector;
Figure 4 illustrates schematically a cross-section of an exemplary embodiment of a tank comprising two heaters and a first connector coupled to a second connector, wherein both the first connector and the second connector are located inside the tank;
Figure 5 illustrates schematically a perspective view of an exemplary embodiment of a first connector and a second connector which can be coupled to each other;
Figure 6 illustrates schematically a perspective view of another exemplary embodiment of a first connector and a second connector which can be coupled to each other;
Figure 7 illustrates schematically a cross-section of an exemplary embodiment of a tank comprising a first connector coupled to a second connector integrated in a frame; and
Figures 8A-D illustrate schematically top views of a number of possible closed curves.

### Description of embodiments

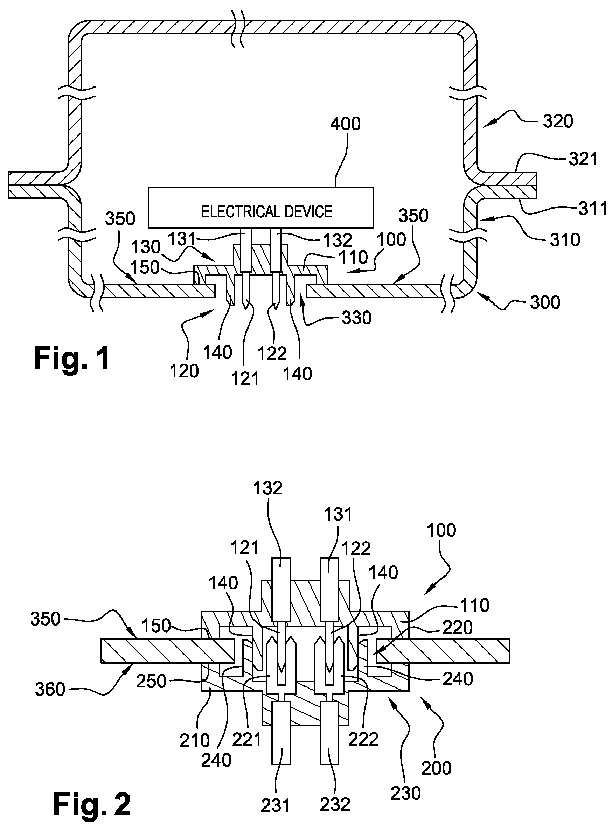

Figure 1 illustrates an exemplary embodiment of a tank 300 comprising a first connector 100 attached to an electrical device 400, e.g. a heater, a pump, a sensor, etc. The first connector 100 comprises a plastic part 110 and two electrically conductive contact elements 121, 122 protruding out of a coupling side 120 of the plastic part 110. The first electrically conductive contact elements 121, 122 are electrically connected with the electrical device 400 via cables 131, 132 which are integrated in the plastic part 110 of first connector 100, wherein the cables 131, 132 are electrically connected to the first electrically conductive contact elements 121, 122, respectively. First connector 100 is adapted to be coupled with a second connector 200, see figure 2. The second connector 200 comprises a second plastic part 210 and two second electrically conductive contact elements 221, 222 protruding out of a coupling side 220 of the second connector 200. The two second electrically conductive contact elements 221, 222 are configured for being coupled with the first electrically conductive contact elements 121, 122, respectively.

The first plastic part 110 is welded along a closed curve 150, e.g. along a ring surface, to a plastic portion inside the tank 300, here an inner side 350 of the tank surrounding a connector opening 330 in the tank 300. The closed curve 150 extends around, i.e. surrounds or includes, the first electrically conductive contact elements 121, 122. In a typical embodiment, the tank 300 comprises a first shell 310 and a second shell 320 which are welded along a circumferential flange 311, 321 to form the tank 300. The welding along the closed curve 150 of the first connector 100 may be performed before the first and second shells 310, 320 of tank 300 are welded. In an exemplary embodiment, the first connector 100 is welded to the inner side 350 of the tank by hot plate welding or by laser welding from the outside of the tank 300. In the latter case the tank is preferably manufactured from a material which is transparent for the laser radiation, whilst the first plastic part 110 is preferably manufactured from a plastic material configured to absorb heat, e.g. a black plastic material.

The first plastic part 110 is welded such that the electrically conductive contact elements 121, 122, protruding outward of the first plastic part 110, are accessible from the outside of the tank. More in particular, the first and second electrically conductive contact elements 121, 122 are protruding outwardly of the first plastic part 110 at a coupling side 120 of the first connector 100. At the other cable side 130 of the first connector 100, first and second cables 131, 132 power the electrical device 400. The connection cables 131, 132 have an end which is sealingly integrated in the first plastic part 110, and the two first electrically conductive contact elements 121, 122 are electrically connected inside the first plastic part 110 to the two connection wires of the two connection cables 131, 132.

The two electrical cables 131, 132 may have a plastic sheath made of a thermoplastic polymer material that is compatible with the thermoplastic material of the plastic part 110 in the sense that polymer entanglements are created at the interface of the sheath and the plastic material. The sheath may be made e.g. of a polyamide material, and the thermoplastic plastic material may be e.g. a compatible poly-ethylene material optionally comprising a compound for increasing the polarity (e.g. PE grafted with maleic anhydride, PRIEX®), a polyamide material or a compatible polypropylene material. A polyethylene, grafted with an extra high content of maleic anhydride has the advantage that the grafted maleic anhydride introduces polarity to the polymer achieving compatibility between polyolefins and more polar materials or polymers like EVOH or Polyamide. More generally, the skilled person understands that many compatible materials exist for the sheath and the plastic part. There exist tables showing plastic welding compatibility (see e.g. www.lpkfusa.com/lq from the laser welding company LPFK). Such welding compatibility tables also provide a good indication of the compatibility of two materials (sheath material and plastic material of part to be formed) that are being overmoulded.

Further, the first plastic part 110 of the first connector 100 comprises a first positioning element 140 at the coupling side 120, and the second plastic part 210 of the second connector 200 has a corresponding positioning element 240 at the coupling side 220. These first and second positioning elements 140, 240 may be e.g. cylindrical parts extending around the first and second contact elements 121, 122; 221, 222, and configured to cooperate in a telescopic manner. End parts of the positioning elements 140, 240 may be chamfered to further facilitate the guiding of the positioning elements 140, 240 with respect to each other.

Optionally, the second plastic portion 210 may be welded along a closed curve 250 to an outer side 360 of the tank 300. In that manner, the electrically conductive coupling portions 121, 122; 221, 222 will be sealed from the outside avoiding e.g. moist penetration between the coupling sides 120, 220 of the first and second connector 100, 200.

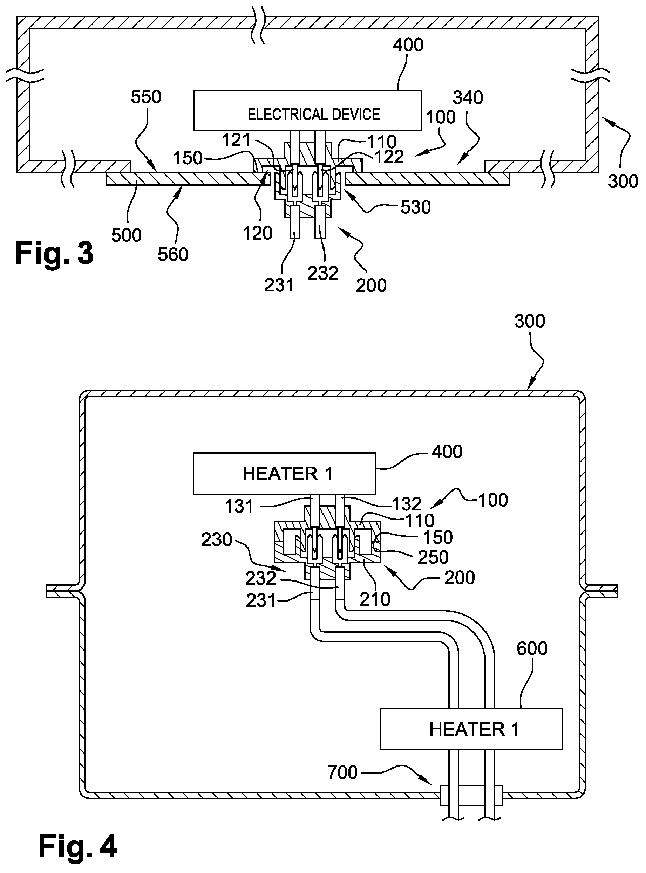

Figure 3 illustrates schematically a second exemplary embodiment of the invention. In this embodiment, the tank 300 has a flange opening 340 which is closed by a mounting flange 500. In this embodiment, the first connector 100 has a first plastic part 110 which is welded along a closed curve 150 to the inner side 550 of the flange 500, around a connector opening 530 in the mounting flange 500. In other words, the first connector 100 is welded to the immersed side of the mounting flange 500. The first electrically conductive contact elements 121, 122 protrude outwardly of a coupling side 120 of the first connector 100, through the connector opening 530 in the mounting flange 500. The first connector 100 may be identical to the first connector 100 of the first exemplary embodiment of figures 1 and 2, and may be connected in a similar manner to an electrical device 400. The second connector 200 is similar to the connector 200 of figure 2, with this difference that the second plastic part 210 is not welded to the outward side 560 of the flange 500. However, in an alternative embodiment, the second connector 200 may be similar to the second connector 200 of figure 2, and may be welded to the outer side 560 of the mounting flange 500. In yet another non-illustrated embodiment, there may be provided a cover over the second connector 200. Also, the second connector 200 may be part of an electronic unit mounted outside of the tank 300, e.g. on the outer side 560 of the mounting flange 500.

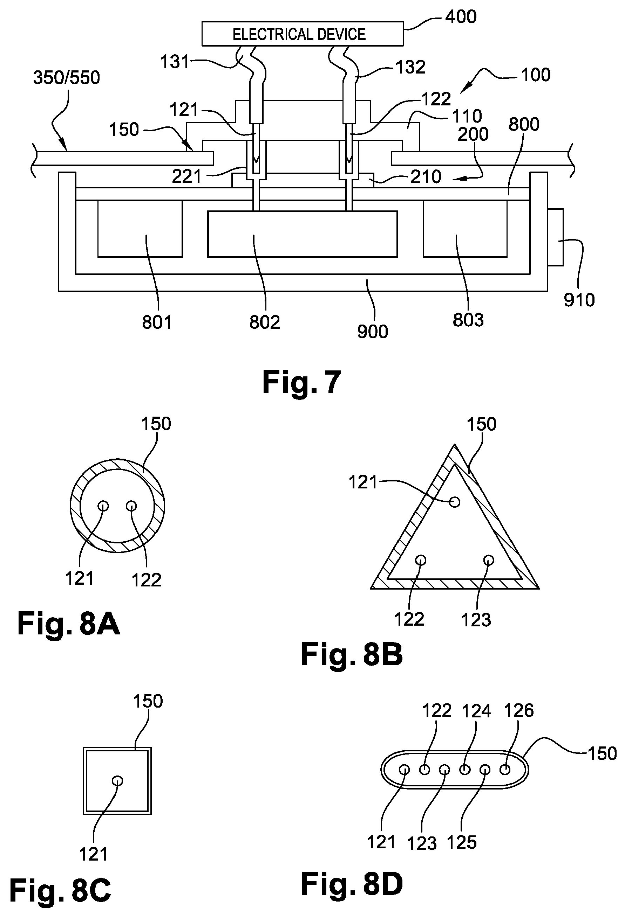

In a further developed embodiment shown in figure 7, the second connector 200 is integrated in a frame 800 attached to a cover 900. More in particular the second plastic part 210 of second connector 200 may be an integrated part of frame 800. Frame 800 may be connected to cover 900 by any type of suitable means, e.g. a snap-fit connection.. A number of components 801, 802, 803, e.g. electronic components such as sensor or control parts, may be attached to the frame 800 and/or to the cover 900. Further, there may be provided a third connector 910 at a side wall of the cover 900 connected directly or indirectly to the second connector 200. In this embodiment the first connector 100 may be welded to an inner side 350 of a tank wall as in the embodiment of figure 1 or may be welded to an inner side 550 of a mounting flange, as in the embodiment of figure 3.

Figure 4 illustrates schematically a third exemplary embodiment of the invention. In this embodiment, the tank 300 comprises two heaters 400, 600. A first connector is connected to the first heater 400 in the same manner as described above for electrical device 400. The second connector 200 is similar to the second connector of figure 2. However, in the embodiment of figure 4, both the first and the second connector 100, 200 are located entirely within the tank 300, and an outer circumferential edge 150 of plastic part 110 of the first connector 100 is welded to an outer circumferential part 250 of second plastic part 210 of the second connector 200. The cables 231, 232 provided at the cable side 230 of the second connector 200 are an integral part of the second heater 600. In that way, the first and the second heater may be connected in series inside the tank. The connecting cables 231, 232 may be brought outside of the tank via any suitable cable connection piece 700. Also, there may be provided instead of connection piece 700, a further first and second connector 100, 200, as in the embodiment of figures 1 and 2 or figure 3. In other words, there may be provided a first connector 100 coupled to a second connector 200 entirely within the tank, as well as a first connector 100 welded to an inner side of the tank around a connector opening in the tank.

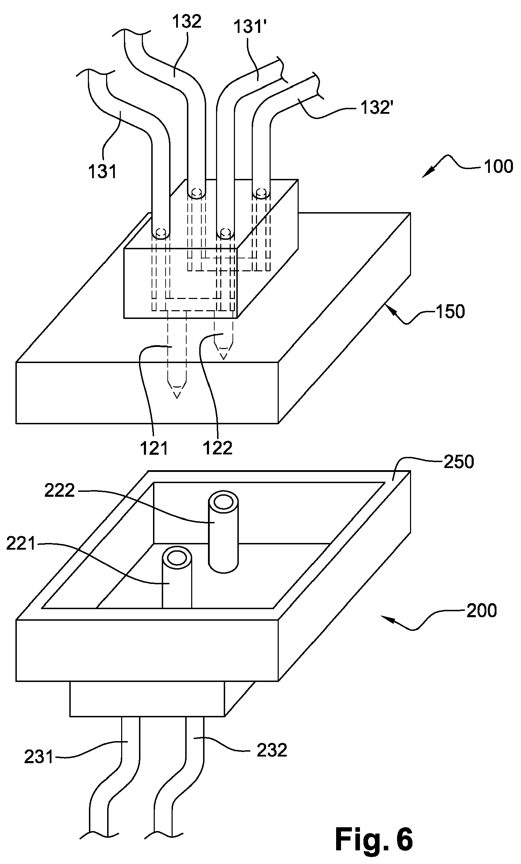

In other embodiments of the invention, there may be provided two heaters connected in parallel in the tank. This may be achieved e.g. by using the first and second connector 100, 200 of figure 6. The first connector 100 of figure 6 may be welded to an inner side of the tank, wherein connecting pins 121, 122 protrude outwardly of the tank. In this embodiment, the first connector 100 comprises four wire end parts of cables 131, 132, 131', 132'. A first wire 131 e.g. connected to the first heater, and a first wire 131' e.g. connected to the second heater are both connected to a first contact pin 121. Similarly, a second wire 132 e.g. connected to the first heater, and a second wire 132' e.g. connected to the second heater are both connected to a second contact pin 122. In that way, a first and second heater may be fed in parallel. Of course it is also possible to provide two first connectors 100, and two second connectors 200 in order to connect a first heater independently of a second heater.

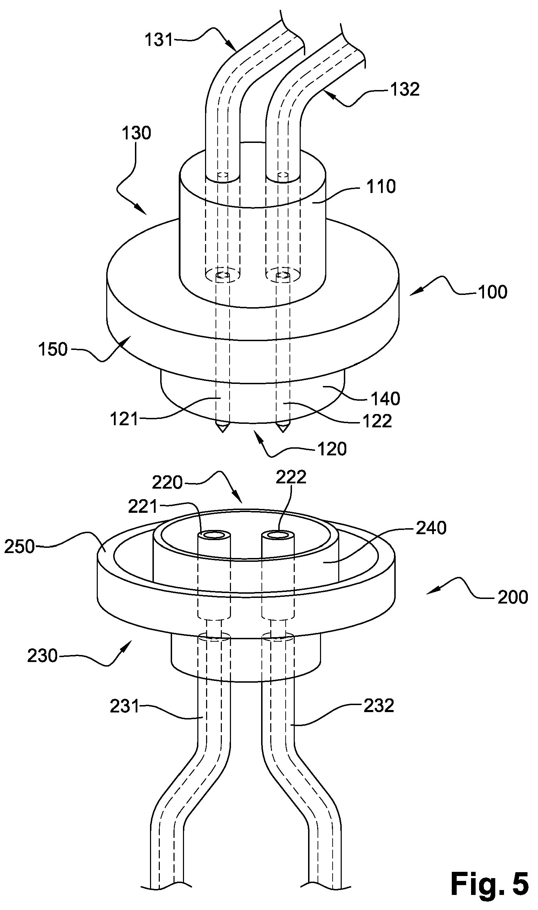

Figure 5 illustrates a perspective view of an exemplary embodiment of a first and second connector. In this embodiment, the first plastic part 110 of the first connector 100 is shaped with a plurality of cylindrical parts, and the second connector 200 is shaped correspondingly with a plurality of cylindrical parts. The skilled person understands that the invention is not limited to connectors with a cylindrical shape, and that other shapes are equally possible, see e.g. the embodiment of figure 6. The various components of the first and second connector 100, 200 have been discussed above in the various embodiments, and are not repeated.

The closed curve 150 may have various shapes as illustrated in figures 8A-8D. In a first exemplary embodiment the closed curve 150 is part of a ring shaped surface surrounding two electrically conductive contact elements 121, 122, as in figure 1. In a first exemplary embodiment the closed curve 150 is part of a triangular shaped surface surrounding three electrically conductive contact elements 121, 122, 123. In a third exemplary embodiment the closed curve 150 is a square surrounding one electrically conductive contact element 121. In a fourth exemplary embodiment the closed curve 150 is an oval surrounding six electrically conductive contact elements 121, 122, 123, 124, 125, 126.

Embodiments of the method of the invention allow obtaining a sealed interface for an electrical appliance arranged in a tank, e.g. in a urea tank, a diesel tank, a fuel tank, etc.

Whilst the principles of the invention have been set out above in connection with specific embodiments, it is to be understood that this description is merely made by way of example and not as a limitation of the scope of protection which is determined by the appended claims.

## Claims

1. A tank comprising an electrical device attached to a first connector, said first connector being adapted for being coupled to a second connector, said first connector comprising a first plastic part and at least one first electrically conductive contact element, said at least one first electrically conductive contact element being electrically connected with said electrical device, said second connector comprising a second plastic part and at least one second electrically conductive contact element, said at least one second electrically conductive contact element being configured for being coupled with said at least one first electrically conductive contact element, wherein said first plastic part is adhered along a closed curve extending around the at least one first electrically conductive contact element to a plastic portion inside the tank.

2. The tank of claim 1, wherein said plastic portion inside the tank is any one of the following: an inner side of the tank surrounding a connector opening in the tank; the second plastic part of the second connector; an inner side of a mounting flange arranged in or around a flange opening in the tank.

3. The tank of claim 2, wherein the tank has a wall with the connector opening, wherein said first plastic part is adhered along a closed curve to an inner side of the tank surrounding the connector opening, and wherein said second plastic portion is adhered along a closed curve to an outer side of said tank surrounding the connector opening.

4. The tank of claim 1 or 2, wherein the first plastic part is adhered along a closed curve to the second plastic part of the second connector, around the at least one first and second electrically conductive contact element.

5. The tank of claim 4, wherein said first connector is coupled to said second connector inside said tank, and said first and second connector are located entirely within the tank.

6. The tank of any one of the previous claims, wherein the electrical device comprises at least one connection cable, wherein the at least one connection cable has an end which is sealingly integrated in the first plastic part, and wherein the at least one first electrically conductive contact element is electrically connected to at least one connection wire of the at least one connection cable.

7. The tank of any one of the previous claims, wherein the electrical device has two connection cables, and wherein the first connector comprises two electrically conductive contact elements connected to said two connection cables inside the first plastic part.

8. The tank of any one of the previous claims, wherein said at least one first or second electrically conductive contact element comprises at least one connector pin, and wherein said at least one second or first electrically conductive contact element comprises at least one contact bus dimensioned for receiving said at least one connector pin.

9. The tank of any one of the previous claims, wherein the first plastic part is adhered to the plastic portion by welding.

10. The tank of any one of the previous claims, wherein the first plastic part comprises a first positioning element between the at least one first electrically conductive contact element and the closed curve, and the second plastic part comprises a second positioning element configured to cooperate with said first positioning element such that the positioning of the second connector is guided by the first and second positioning elements.

11. A method for connecting an electrical device in a tank, comprising
providing said electrical device with a first connector, said first connector comprising a first plastic part and at least one first electrically conductive contact element being electrically connected with said electrical device;
assembling the tank such that said first plastic part is adhered along a closed curve to a plastic portion inside the tank; and such that a second connector is coupled with said first connector, wherein said second connector comprises a second plastic part and at least one second electrically conductive contact element, said at least one second electrically conductive contact element being coupled with said at least one first electrically conductive contact element.

12. The method of claim 11, wherein the plastic portion inside the tank is any one of the following: an inner side of the tank surrounding a connector opening in the tank; the second plastic part of the second connector; an inner side of a mounting flange arranged in or around a flange opening in the tank.

13. The method of claim 11 or 12, wherein the adhering is done by welding.

14. The method of any one of the claims 11-13, wherein the first plastic connector is made by overmoulding a connection cable with the plastic material, and by connecting the at least one first electrically conductive contact element to a connection wire of the connection cable.

15. The method of any one of the claims 11-14, wherein the assembling of the tank comprises:
- adhering the first plastic part along a closed curve to an inner side of a first tank shell,
- adhering the first tank shell to a second tank shell such that a tank enclosing the electrical device is formed, and
- coupling the second connector to the first connector.
